Europäisches Patentamt

European Patent Office

Office européen des brevets

(19)

(11) Publication number : **0 521 063 B1**

(12) **EUROPEAN PATENT SPECIFICATION**

(45) Date of publication of patent specification :
**18.05.94 Bulletin 94/20**

(21) Application number : **91906647.2**

(22) Date of filing : **28.02.91**

(86) International application number :
**PCT/US91/01128**

(87) International publication number :
**WO 91/14735 03.10.91 Gazette 91/23**

(51) Int. Cl.⁵ : **C08L 27/18, C08K 3/04,
// (C08L27/18, 67:00)**

(54) PROCESSING ADDITIVES FOR TETRAFLUOROETHYLENE POLYMERS.

(30) Priority : **23.03.90 US 500048
23.03.90 US 500049**

(43) Date of publication of application :
**07.01.93 Bulletin 93/01**

(45) Publication of the grant of the patent :
**18.05.94 Bulletin 94/20**

(84) Designated Contracting States :
**DE FR GB IT**

(56) References cited :
**EP-A- 53 778
EP-A- 281 649
FR-A- 2 243 970
US-A- 4 014 845**

(56) References cited :
**D.R. PAUL & L.H. SPERLING (Eds.): "ADV.
CHEM. SER., 211 (MULTICOMP. POLYM.
MATER:)" 1986, AMERICAN CHEMICAL SOCI-
ETY, WASHINGTON, US: P. COUSIN ET AL.
: "SPECIFIC INTERACT. IN POLYESTER-
POLY(VINYL HALIDE) BLENDS" see pages
87-110**

(73) Proprietor : **E.I. DU PONT DE NEMOURS AND
COMPANY
1007 Market Street
Wilmington Delaware 19898 (US)**

(72) Inventor : **KIM, Young, Hwan
2203 Bradmoor Road
Wilmington, DE 19803 (US)**

(74) Representative : **Jones, Alan John et al
CARPMAELS & RANSFORD 43 Bloomsbury
Square
London, WC1A 2RA (GB)**

## Description

### FIELD OF THE INVENTION

A blend of tetrafluoroethylene polymers and polymers of selected poly(2,2-dialkylpropiolactones), and mixtures of such blends with one or more other materials, especially particulate carbon, is disclosed. Also disclosed is a process for making the blends and mixtures. Such blends and mixtures are useful to improve processing of tetrafluoroethylene polymers, and readily undergo pyrolysis to give tetrafluoroethylene polymer parts with improved physical properties.

### BACKGROUND OF THE INVENTION

Fabrication of polytetrafluoroethylene (PTFE) and some copolymers of tetrafluoroethylene, including those containing particulate carbon and other materials, is often difficult, due to the fact that even above their melting points they flow little if at all. Thus, typical plastics melt processing techniques are often useless with such polymers. Previous attempts have been made by others to make these polymers more processible, in order to make useable parts. It is well known in the art to use particulate carbon to improve the physical properties of polymers and polymer parts, and to impart electrical conductivity to such polymers and parts.

Thus U.S. Patent 2,685,707 and J. F. Lontz, et al., Ind. Eng. Chem., vol. 44. pp. 1805-1810 report that many low molecular weight organic compounds such as hydrocarbons and esters can be used as "lubricants" to aid in the forming of parts from particulate PTFE. The lubricants are removed typically by volatilization and/or sintering, and a solid part is produced by sintering the remaining PTFE.

U.S. Patents 3,407,249 and 3,679,614 report that porous PTFE parts are produced by mixing particulate PTFE with poly(methyl methacrylate) (PMMA) and other compounds. The PMMA and other compounds can be removed by use of solvents for the PMMA such as acetone.

U.S. Patents 2,985,918 and 3,054,761 describe a process for making and using a composition comprising PTFE and PMMA. This mixture may be sintered to volatilize and decompose the PMMA, and to sinter the PTFE, so that a porous PTFE article is produced.

British Patent 1,390,100 describes a mixture of a polyolefin such as polyethylene, PTFE and for example carbon black or bronze powder. The polyolefin is believed to act as a processing aid.

Japanese Patent Application 49/039642 discloses PTFE containing powdered graphite.

Japanese Patent Application 49/11912 discloses a dispersion in water of a mixture of PTFE and conductive carbon, which can be used to make a conductive coating.

Japanese Patent Application 58/25368 describes a paste containing, among other items, PTFE aqueous dispersion and an electrically conductive powder such as graphite or carbon black. This too can be used to make electrically conductive coatings.

US-A-4 505 982, corresponding to EP-A-O 053 778, discloses a shaped body said to exhibit good long-term thermal stability, comprising at least one fluorohydrocarbon polymer which can be processed by melting, and at least one heat-resistant thermoplastic polymer, wherein at least the fluorohydrocarbon polymer forms a phase which is coherent or at least largely coherent. The weight ratio of the fluorohydrocarbon polymer to the thermoplastic polymer preferably varies between about 80:20 and 20:80. The shaped body is preferably a film used as a layer of insulation.

Among the desired properties a material should impart to PTFE in order to help form PTFE parts, are, easy mixing of the components, good green strength of the mixture so parts of the mixture will not deform readily, especially under sintering conditions, and clean sintering of the processing aid (lubricant) so that the remaining PTFE part is free of impurities (e.g., ash and char) and has a minimum amount of porosity. It is the object of this invention to provide such a composition and a process for making and using it. None of the above references teaches the use of poly(2,2-dialkylpropiolactones) as processing aids or lubricants for PTFE.

### SUMMARY OF THE INVENTTON

A blend of polymers containing tetrafluoroethylene polymer (TFEP) and selected poly(2,2-dialkylpropiolactones) (PDAP) and a mixture of such blend with other materials, especially particulate carbon, is provided. Such polymer blends or mixtures are useful for producing moldings and extrusions of TFEP which have improved physical properties and may be electrically conducting. After a molding or extrusion part is formed, the PDAP may be removed from the part by pyrolysis; the PDAP is readily and cleanly pyrolyzed from the TFE containing polymer or polymer mixture. Also provided is a process for making, and optionally pyrolyzing, the blend and parts thereof.

DETAILS OF THE INVENTION

This invention provides a polymer blend comprising 5% to 50% by weight of a first polymer with repeat units of the formula -(-$CH_2$-$CR^1R^2$-$C(O)O$-)-, and 95% to 50% by weight of a tetrafluoro-ethylene polymer, wherein $R^1$ and $R^2$ are independently chosen alkyl groups, and provided that the total number of carbon atoms in $R^1$ and $R^2$ is 20 or less.

This invention also provides a composition comprising 5% to 50% by weight of a first polymer with repeat units of the formula -(-$CH_2$-$CR^1R^2$-$C(O)O$-)-, 95% to 50% by weight of a tetrafluoroethylene polymer, and 1% to 233% by weight of said tetrafluoroethylene polymer of particulate carbon, wherein $R^1$ and $R^2$ are independently chosen alkyl groups, and provided that the total number of carbon atoms in $R^1$ and $R^2$ is 20 or less.

By the term "tetrafluoroethylene polymer" (herein TFEP) is herein meant a polymer of tetrafluoroethylene in which up to 20 mole percent of the tetrafluoroethylene monomer may be substituted by other fluorinated monomers. Suitable fluorinated monomers include, but are not limited to, hexafluoropropylene, perfluoro(methyl vinyl ether), vinylidene fluoride and chlorotrifluoroethylene.

Polymers of the formula -(-$CH_2$-$CR^1R^2$-$C(O)O$-)- (herein PDAP) are preferably prepared by anionic polymerization (using tetraalkylammonium carboxylates as initiators) of 2,2-dialkylsubstituted -beta-propiolactones as disclosed in W. H. Sharkey in Ring Opening Polymerization, J. E. McGrath Ed., ACS Symposium Series 286, American Chemical Society, Washington, D. C., p. 373 and references cited therein. The monomeric beta-propiolactones are prepared by procedures described by D. B. Johns, et al., in Ring-Opening Polymerization, Vol. 1, K. J. Ivin and T. Saegura, Eds., Elsevier Applied Science Publishers, New York, NY 1984, Chap. 7. In addition to the polymerization of 2,2-dialkyl-substituted-beta-propiolactones, the polymers of this invention can also be produced by the polymerization of the cyclic carbonate of 2,2-dialkyl-substituted-3-hydroxypropionic acid, or of the free hydroxy acid itself. Such polymers are often referred to as poly(2,2-dialkylpropiolactones). In preferred PDAPs, the total number of carbon atoms in $R^1$ and $R^2$ is 10 carbon atoms or less. In an especially preferred PDAP $R^1$ is methyl and $R^2$ is n-propyl. It is also preferred if the PDAP has a melting point below 200°C. The molecular weight of the PDAP should not be too high or too low. The degree of polymerization should be at least 70 to provide sufficient green strength to the blend. Although no upper limit is known for the PDAP molecular weight, very high degrees of polymerization (>10,000) will unnecessarily increase the viscosity of the (melted) blends. A preferred degree of polymerization range for the PDAP is 100 to 5,000.

In preferred blends the PDAP is 10% to 30% by weight and the TFEP is 90% to 70% by weight. In especially preferred blends the PDAP is 15% to 25% by weight and the TFEP is 85% to 75% by weight.

These blends and mixtures are useful as molding resins which have high green strength and (for those that contain conductive carbon) are electrically conductive. The electrical conductivity makes these compositions especially useful in electrical applications, such as for shielding electric and magnetic fields, and for parts where conductivity is an advantage, as to form an electrical ground. It is well known in the art that many TFEPs (including their PC containing compositions) are difficult to process, exhibiting very high melting points, and even above their melting points, have very poor flow characteristics. These blends and mixtures allow the processing of TFEPs into useful objects by methods such as extrusion and injection molding (infra). In addition, if desired, the PDAP in the mixture is easily and cleanly pyrolyzed from the mixture to give objects (infra) containing TFEP as the sole polymer. The mixtures may be made by the processes described below.

Other materials commonly present in or added to the polymers may also be present, such as, but not limited to fillers and reinforcing agents such as "particulate carbon" (PC), pigments and antioxidants, as long as the above proportions of TFEP and PDAP are maintained. Where PC is added, up to 20% by weight (of the TFEP and PC combined) of the other materials, such as fillers, pigments and antioxidants, as long as the above proportions of TFEP, PDAP and PC are maintained.

By the term "particulate carbon" (PC) is meant herein the types of carbon, usually in the form of small particles or fibers, that are typically used as fillers and/or reinforcing agents for polymers. Such materials include, but are not limited to, carbon black, acetylene black, powdered graphite and carbon fibers. An especially preferred form of particulate carbon is one that is "conductive carbon". By the term "conductive carbon" herein is meant small particles of carbon that are electrically conducting. Such materials include, but are not limited to, selected carbon blacks, powdered graphite and carbon fibers (CF). Carbon fibers are the preferred form of particulate carbon. Especially preferred are carbon fibers, or fragments thereof, described in Claim 1 of U.S. Patent 4,861,653 as follows:

"1. A bat of randomly disposed carbon fibers, said fibers predominantly having in cross-section a width of less than about 12 micrometers and a fracture surface exhibiting a lamellar microstructure composed of lamellae arranged in an isoclinic relationship and disposed in a direction generally parallel to an axis of the fiber cross-section, the lamellae extending to the periphery of the fiber cross-sections."

These and other especially preferred carbon fibers have a lamellar microstructure and a distribution of diameters from 1 micrometer to more than 10 micrometers, with a number average diameter of 8 micrometers, and are electrically conducting. These fibers are heat treated in an inert atmosphere to above 1600°C, more preferably 2400°C. It is preferred if the amount of PC present is 5% to 100% by weight of the TFEP, most preferably 10% to 67% by weight of the TFEP present. The calculation of the amount of PC in the mixture is based on the amount of TFEP in the mixture. For example, 233% PC in the mixture means that there is 2.33 times the amount of PC than TFEP, and 1% PC means there is 0.01 times the amount of PC in the mixture as TFEP.

Also provided in this invention is a process of making polymeric parts, comprising:

(a) mixing 5% to 50% by weight of a first polymer with repeat units of the formula -(-$CH_2$-$CR^1R^2$-C(O)O-)-, with 95% to 50% by weight of a tetrafluoroethylene polymer, wherein $R^1$ and $R^2$ are independently chosen alkyl groups, and provided that the total number of carbon atoms in $R^1$ and $R^2$ is 20 or less, to form a blend;

(b) melt blending said blend at a temperature above the glass transition temperature and melting point of said first polymer but below 270°C; and

(c) forming said blend into a shaped part.

The definition of the tetrafluoroethylene polymer is as given above. Preferred PDAPs and preferred proportions of TFEP and PDAP are as enumerated above.

Mixing of the polymers may be accomplished in several ways. For example, simple dry powder blending may be used, although care should be exercised to obtain a uniform blend. A preferred mixing method is to dissolve the PDAP in a solvent such as methylene chloride, and adding this solution to an agitated slurry of the TFEP. The liquid used to make the slurry of TFEP should be miscible with the solvent for the PDAP, but should be a nonsolvent for the PDAP. While the resulting slurry is agitated, the solvents are evaporated to give a blend of the polymers.

It has been found that some types of TFEP "powders" give blends that are agglomerated at this point. They may be rendered into a more useful form (powders) by grinding, as with a mortar and pestle, a ball mill or a hammer mill. Certain types of PC, such as carbon fibers, may be degraded by grinding; they may be added by drying powder blending after the grinding operation. It has been found that so-called "granular TFEPs" give blends that are powders (or granular) at this point without the need for grinding. Such granular TFEPs are preferred and may be made by the processes described in: U.S. Patent 2,936,301; or U.S. Patent 3,766,133 followed by deagglomeration in a mechanical mill. Such polymers are also described by American Society for Testing Material Specification D-4894-89, Type 3 Grade 1 and Type 2.

The melt blending of the blend or mixture may be accomplished by a variety of methods known to those skilled in the art of polymer processing. For example, compression molding, that is applying pressure and heat in a hydraulic press may be used. A preferred method is a screw melter, such as in a screw extruder. This provides good mixing to provide a uniform mixture. The melt blending should be carried out at a temperature high enough to melt the PDAP, above its melting point, or if the polymer is not crystalline, above its glass transition temperature. The temperature should be kept below 270°C to avoid decomposition of the PDAP and/or gross separation of the PDAP and the TFEP. After the mixture is melt blended the product may be pelletized in conventional ways for further processing into a shaped part, or may be formed directly from the melted state into a shaped part as by compression molding, extrusion through a die and injection molding. Further processing into a shaped part at a later time could also be by these methods, although melting of the PDAP may not be necessary to form a shaped part. For example, moderate heat and high pressure may cause the blend to flow by plastic deformation into a shaped part. However a melt process is preferred to form the shaped part.

After the shaped part is formed, it may be used as is, having the "composite" properties of the blend's or the mixture's constituents. However, in order to improve certain properties such as solvent, chemical and high temperature resistance, it may be desirable to remove the PDAP so that essentially pure TFEP (plus any other nonvolatile ingredients such as filler and pigments) remains. This can be accomplished by the optional additional step of pyrolysis of a shaped part of the blend. This comprises the additional step of pyrolyzing the shaped part 275°C to 400°C, preferably 300°C to 350°C until the PDAP is converted to volatile products.

The pyrolysis may be carried out in air, or in an inert atmosphere such as nitrogen. Air is preferred. As is known to those skilled in the art, pyrolyses such as these may cause porosity in the resulting TFEP part. This porosity may be minimized by raising the temperature of the shaped part slowly as the decomposition point of the PDAP (>275°C) is approached and passed. Porosity that occurs may be reduced by densifying the pyrolyzed part. Densifying the part may be done by heating the part at 350°C to 400°C for an additional period after pyrolysis is completed. Such procedures are known in the art. It is also known in the art that the properties of the resulting pyrolyzed part may be affected by the manner in which the part is cooled after the pyrolysis or densification.

The following Examples illustrate the invention. In these Examples various grades of Teflon Fluorocarbon Resin (Trademark of and available from E. I. du Pont de Nemours & Co., Inc., Wilmington, DE) are used. These

4

grades, except as noted, are homopolymers of tetrafluoroethylene, and are so-called granular materials. Melt Index tests were performed according to ASTM D-1238 using a 15 kg weight, and except where noted were done at 200°C. Tensile strength (TS), tensile modulus (TM) and percent tensile elongation to break (EB) were measured on an Instron tester at a crosshead speed of 2.54 cm/min at about 25°C, except where otherwise noted. By green strength is meant the properties of unpyrolyzed blend. Injection molding was done on a one-ounce (28 g) ram injection molding machine with a barrel temperature of 150°C, using a 3.2 x 12.7 x 127 mm flex bar mold. In all of the Examples, PDAP refers to poly(2-methyl-2-n-propylpropiolactone). Ratios of components of mixtures of blends with carbon are by weight.

## EXAMPLE 1

Enough methanol was added to 80 g of Teflon 7A so that the Teflon was barely covered. To this was added over a period of 30 to 60 min one-quarter of a solution of 80 g of PDAP in methylene chloride. The Teflon slurry was agitated while the PDAP solution was being added. The slurry was agitated while the solvent was then evaporated with a stream of nitrogen. A fine powder was obtained.

## EXAMPLES 2-11

Using procedures similar to that in Example 1, various blends of Teflon with PDAP were prepared. The ratios of PDAP to Teflon were varied by adjusting the amounts of PDAP solution and Teflon used. These mixtures, and some of their melt indicies, are given in Table 1. The melt index tests produced rods approximately 2 mm in diameter which were further tested (see Example 12).

TABLE 1

| Example | Teflon Used | Percent PDAP | Melt Index g/min. |
|---|---|---|---|
| 2 | 7A | 20 | 0.67-0.12 |
| 3 | 7A | 5 | - |
| 4 | 7A | 10 | very small |
| 5 | 7A | 15 | 0.0058 ± 0.0015 |
| 6 | 7A | 20 | - |
| 7 | 7C | 20 | - |
| 8 | 7C | 20 | - |
| 9 | 7A | 20 | - |
| 10 | 7A | 25 | 2.77 ± 0.71 |
| 11 | 7A | 30 | 41.2 ± 41.4 |

## EXAMPLE 12

This Example illustrates pyrolyzing (sintering) of the polymer blends. Rods from Examples 2, 6, and 7 (all contain 20% PDAP) were combined and used in this Example.

These rods were heated in a furnace to 275°C at a rate of 2°C/min in an air atmosphere, and held at that temperature for 3 hr. The temperature was then raised to 380°C at a rate of 1°C/min, and then held at 380°C for 3 hr. The recovered rods showed a loss of weight of 19.2 +/- 0.27% (9 samples), shrinkage in the machine direction of 31.0 +/- 3.0% (6 samples), and little or no change in the transverse direction.

Different rods were also pyrolyzed at 325°C in air by putting them into a furnace that was at 325°C. The rods turned brown in about 5 min, and then appeared to be a black chary material after 10 min (total). The color started to fade in 2-3 hr and white materials were obtained in 4 to 70 hr. The samples, which were not pyrolyzed completely, had black spots all over, but especially at the surface.

Physical properties of green (unpyrolyzed) rods, and the rods pyrolyzed at 380°C and 325°C are given in Table 2.

TABLE 2

| | No Pyrolysis* | Pyrolyzed at 380°C | 325°C* |
|---|---|---|---|
| TS kPa (psi) | 7860 ± 400 (1140 ± 58) | 8481 ± 510 (1230 ± 74) | 23,484 (3406) |
| TM MPA (Kpsi) | 141 ± 52 (20.4 ± 7.5) | 222 ± 76 (32.2 ± 11.0) | 200 (29) |
| EB (%) | 22.3 ± 5.3 | 15.1 ± 4.6 | 48.3 |

*Crosshead speed 0.51 cm/min.

EXAMPLE 13

By a procedure similar to that in Example 1, 200 g of a blend of PDAP (20%) and Teflon 7A (80%) was prepared. The sample was injection molded to form flex bars. Strips about 10 microns thick were cut along the machine direction from these bars. Some strips were placed in an oven at 325°C or 345°C under an air atmosphere. At 325°C the strips pyrolyzed cleanly in 12 hr. At 345°C the strips had pyrolyzed cleanly in less than 6 hr, but some strip edges had fibrillated. Good intact pyrolyzed strips were obtained at 325°C, these strips having shrunk about 30% in the machine direction. The physical properties of green (unpyrolyzed) strips and strips pyrolyzed at 325°C are given in Table 3.

TABLE 3

| | Unpyrolyzed | Pyrolyzed |
|---|---|---|
| TS kPa (psi) | 8853 ± 1151 (1284 ± 167) | 13010 ± 696 (1887 ± 101) |
| TM MPa (Kpsi) | 180 ± 26 (26.1 ± 3.7) | 280 ± 62 (40.6 ± 2.7) |
| EB (%) | 32.2 ± 12.4 | 43.2 ± 9.0 |

EXAMPLE 14

To 270 g of Teflon 7A suspended in 500 ml of methanol was added a solution of 91.3 g of PDAP (inherent viscosity 0.32 in methylene chloride. The Teflon slurry was stirred vigorously as the PDAP solution was added over about 10 min. The slurry was agitated while the solvent was evaporated with a stream of nitrogen. A white powdery material weighing 357.7 g was obtained.

The polymer blend was passed through an 80 mesh sieve, and then 15 g of the sieved powder was mixed with 10 g of chopped carbon fiber (as described in U.S. Patent 4,861,653, claim 1), and mixed on a roller mixer for 24 hr. This gives a mixture with 83% (of the amount of Teflon present) carbon fiber. Another mixture containing 31% (of the amount of Teflon present) carbon fiber, and 20 weight percent of PDAP (based on the total of the PDAP and Teflon present) was similarly produced.

The mixtures were extruded from a capillary rheometer at temperatures between 120°C and 180°C to form rods. The viscosity dropped as the temperature increased. The flow characteristics at 150°C are given in Table 4. The physical properties of the extrudates, measured at 25°C, are given in Table 5.

6

TABLE 4

| Shear Rate (sec$^{-1}$) | Shear Stress kPa (psi) | | |
|---|---|---|---|
| | 0% CF | 31% CF | 83% CF |
| 22.8 | 234 (34) | 248 (36) | 683 (99) |
| 26.1 | 347 (50.4) | 340 (49.3) | 786 (114) |
| 228.3 | 590 (85.5) | 469 (68.0) | 926 (141.5) |
| 260.9 | 802 (116.3) | 787 (114.1) | 1240 (179.8) |

TABLE 5

| | % Carbon Fiber | |
|---|---|---|
| | 31 | 83 |
| TS kPa (psi) | 15,307 ± 414 (2220 ± 60) | 16,548 ± 621 (2400 ± 90) |
| TM MPa (Kpsi) | 372 ± 83 (54 ± 12) | 317 ± 103 (46 ± 15) |
| EB (%) | 10 ± 1 | 8 ± 2 |

The rods were heated at 325°C for 24 to 60 hr in air in order to pyrolyze the PDAP. The weight and dimensional changes, and physical properties are summarized in Table 6.

TABLE 6

| | % Carbon Fiber | |
|---|---|---|
| | 31 | 83 |
| Weight before pyrolyzing | 1.1383 g | 0.6428 g |
| Weight after pyrolyzing | 0.9234 g | 0.5468 g |
| Length before pyrolyzing | 152.5 cm | 82.5 cm |
| Length after pyrolyzing | 132.5 cm | 67.3 cm |
| TS kPa (psi) | 17,927 ± 621 (2600 ± 90) | 11,722 ± 827 (1700 ± 120) |
| TM MPa (Kpsi) | 393 ± 83 (57 ± 12) | 186 ± 28 (27 ± 4) |
| EB (%) | 30 ± 5 | 24 ± 6 |

The conductivities were measured by the four point measurement method using 1 to 30 microampere current. They are:

As extruded:

    31% carbon fiber               nonconducting

    83% carbon fiber               $2.76 \times 10^{-3}$ ohm$^{-1}$cm$^{-1}$

After heating (pyrolyzing):

    31% carbon fiber               $1.94 \times 10^{-2}$ ohm$^{-1}$cm$^{-1}$

83% carbon fiber          $1.17 \times 10^{-2}$ ohm$^{-1}$cm$^{-1}$

## Claims

1. A polymer blend, comprising, 5% to 50% by weight of a first polymer with repeat units of the formula -(-CH$_2$-CR$^1$R$^2$-C(O)O-)-, and 95% to 50% by weight of a tetrafluoroethylene polymer which is a polymer of tetrafluoroethylene in which up to 20 mole percent of the tetrafluoroethylene monomer may be substituted by other fluorinated monomers, wherein R$^1$ and R$^2$ are independently chosen alkyl groups, and provided that the total number of carbon atoms in R$^1$ and R$^2$ is 20 or less.

2. The composition of Claim 1 wherein there is added from 1% to 233% by weight of said tetrafluoroethylene polymer of particulate carbon.

3. The composition as recited in Claim 2 wherein the said particulate carbon is a conductive carbon.

4. A composition as recited in Claim 1 or Claim 3 wherein said first polymer is present from 10% to 30% by weight, and said tetrafluoroethylene polymer is present from 90% to 70% by weight.

5. A composition as recited in Claim 4 wherein said first polymer is present from 15% to 25% by weight, and said tetrafluoroethylene polymer is present from 85% to 75% by weight.

6. A composition as recited in Claim 1 or Claim 3 wherein said total number of carbon atoms in said R$^1$ and R$^2$ is 10 or less.

7. The composition as recited in Claim 4 or Claim 6 wherein said R$^1$ is methyl and said R$^2$ is n-propyl.

8. The composition as recited in Claim 1, Claim 3 or Claim 5 wherein said first polymer has a melting point of 200°C or less.

9. The composition as recited in Claim 1 or Claim 3 wherein said first polymer has a degree of polymerization of 70 to 10,000.

10. The composition as recited in Claim 9 wherein said first polymer has a degree of polymerization of 100 to 5,000.

11. The composition as recited in Claim 3 or Claim 7 wherein said conductive carbon is present from 5% to 100% by weight of said polytetrafluoroethylene polymer.

12. The composition as recited in Claim 11 wherein said conductive carbon is present from 10% to 67% by weight of said polytetrafluoroethylene polymer.

13. The composition as recited in Claim 3, Claim 5 or Claim 12 wherein said conductive carbon is carbon fiber.

14. The composition as recited in Claim 13 wherein the conductive carbon is carbon fiber or fragments thereof in the form of
    "a bat of randomly disposed carbon fibers, said fibers predominantly having in cross-section a width of less than 12 micrometers and a fracture surface exhibiting a lamellar microstructure composed of lamellae arranged in an isoclinic relationship and disposed in a direction generally parallel to an axis of the fiber cross-section, the lamellae extending to the periphery of the fiber cross-sections".

15. A process of making polymeric parts, comprising:
    (a) mixing 5% to 50% by weight of a first polymer with repeat units of the formula -(-CH$_2$-CR$^1$R$^2$-C(O)O-)-, with 95% to 50% by weight of a tetrafluoroethylene polymer, which is a polymer of tetrafluoroethylene in which up to 20 mole percent of the tetrafluoroethylene monomer may be substituted by other fluorinated monomers, wherein R$^1$ and R$^2$ are independently chosen alkyl groups, and provided that the total number of carbon atoms in R$^1$ and R$^2$ is 20 or less, to form a blend;
    (b) melt blending said blend at a temperature above the glass transition temperature and melting point of said first polymer but below 270°C; and

(c) forming said blend into a shaped part.

16. A process as recited in Claim 15 wherein said first polymer is present from 10% to 30% by weight, and said tetrafluoroethylene polymer is present from 90% to 70% by weight.

17. A process as recited in Claim 16 wherein said first polymer is present from 15% to 25% by weight, and said tetrafluoroethylene polymer is present from 85% to 75% by weight.

18. A process as recited in Claim 15 wherein said total number of carbon atoms in said $R^1$ and $R^2$ is 10 or less.

19. The process as recited in Claim 15, Claim 16 or or Claim 17 wherein said $R^1$ is methyl and said $R^2$ is n-propyl.

20. The process as recited in Claim 15, Claim 16 or Claim 17 wherein said first polymer has a melting point of 200°C or less.

21. The process as recited in Claim 15 wherein said first polymer has a degree of polymerization of 70 to 5,000.

22. The process as recited in Claim 15 wherein said forming is done by melt forming.

23. The process as recited in Claim 22 wherein said melt forming is done by a screw melter.

24. The process as recited in Claim 22 wherein said melt forming is done by a process selected from compression molding, extrusion through a die and injection molding.

25. The process as recited in Claim 15 or Claim 19 further comprising pyrolyzing said shaped part at a temperature from 275°C to 400°C, until said first polymer is volatilized.

26. The process as recited in Claim 25 wherein said pyrolysis is carried out at 300°C to 350°C.

27. The process as recited in Claim 15 or Claim 19 wherein said mixing is carried out by steps, comprising:
   (a) dissolving said first polymer in a solvent to form a solution;
   (b) slurrying said polytetrafluoroethylene polymer in a nonsolvent for said first polymer to form a slurry;
   (c) while agitating said slurry, adding said solution to said slurry; and
   (d) evaporating said solvent and said nonsolvent.

28. The process as recited in Claim 27 wherein said polytetrafluoroethylene polymer is a granular material.

29. The process as recited in Claim 15 or Claim 18 wherein said mixing is done by dry powder blending.

**Patentansprüche**

1. Polymer-Gemisch, umfassend
   5 bis 50 Gew.-% eines ersten Polymers mit Repetiereinheiten der Formel $\{CH_2CR^1R^2\text{--}C(O)O\}$ und
   95 bis 50 Gew.-% eines Tetrafluorethylen-Polymers, das ein Polymer des Tetrafluorethylens ist, worin bis zu 20 Mol-% des Tetrafluorethylen-Monomers durch andere fluorierte Monomere substituiert sein können,
   worin $R^1$ und $R^2$ unabhängig ausgewählte Alkyl-Gruppen sind, mit der Maßgabe, daß die Gesamtzahl der Kohlenstoff-Atome in $R^1$ und $R^2$ 20 oder weniger beträgt.

2. Zusammensetzung nach Anspruch 1, worin 1 bis 233 Gew.-%, bezogen auf das Gewicht des Tetrafluorethylen-Polymers, teilchenförmiger Kohlenstoff zugesetzt worden sind.

3. Zusammensetzung nach Anspruch 2, worin der teilchenförmige Kohlenstoff ein leitfähiger Kohlenstoff ist.

4. Zusammensetzung nach Anspruch 1 oder Anspruch 3, worin das erste Polymer in einer Menge von 10 bis 30 Gew.-% vorliegt und das Tetrafluorethylen-Polymer in einer Menge von 90 bis 10 Gew.-% vorliegt.

5.  Zusammensetzung nach Anspruch 4, worin das erste Polymer in einer Menge von 15 bis 25 Gew.-% vorliegt und das Tetrafluorethylen-Polymer in einer Menge von 85 bis 75 Gew.-% vorliegt.

6.  Zusammensetzung nach Anspruch 1 oder Anspruch 3, worin die Gesamtzahl der Kohlenstoff-Atome in $R^1$ und $R^2$ 10 oder weniger beträgt.

7.  Zusammensetzung nach Anspruch 4 oder Anspruch 6, worin $R^1$ Methyl ist und $R^2$ n-Propyl ist.

8.  Zusammensetzung nach Anspruch 1, Anspruch 3 oder Anspruch 5, worin das erste Polymer einen Schmelzpunkt von 200 °C oder weniger hat.

9.  Zusammensetzung nach Anspruch 1 oder Anspruch 3, worin das erste Polymer einen Polymerisationsgrad von 70 bis 10 000 hat.

10. Zusammensetzung nach Anspruch 9, worin das erste Polymer einen Polymerisationsgrad von 100 bis 5 000 hat.

11. Zusammensetzung nach Anspruch 3 oder Anspruch 7, worin der leitfähige Kohlenstoff in einer Menge von 5 bis 100 Gew.-%, bezogen auf das Tetrafluorethylen-Polymer, vorliegt.

12. Zusammensetzung nach Anspruch 11, worin der leitfähige Kohlenstoff in einer Menge von 10 bis 67 Gew.-%, bezogen auf das Tetrafluorethylen-Polymer, vorliegt.

13. Zusammensetzung nach Anspruch 3, Anspruch 5 oder Anspruch 12, worin der leitfähige Kohlenstoff eine Kohlenstoffaser ist.

14. Zusammensetzung nach Anspruch 13, worin der leitfähige Kohlenstoff eine Kohlenstoffaser oder Fragmente derselben in Form
    "eines Wickels statistisch angeordneter Kohlenstoffasern, die überwiegend im Querschnitt eine Breite von weniger als 12 µm und eine Bruchfläche haben, die eine lamellare Mikrostruktur zeigt, die aus Lamellen besteht, die in isokliner Beziehung angeordnet und in einer Richtung ausgestellt sind, die im allgemeinen zu einer Achse des Faser-Querschnitts parallel ist, wobei die Lamellen zu dem Umfang der Faser-Querschnitte verlaufen",
    ist.

15. Verfahren zur Herstellung polymerer Teile, umfassend
    (a) das Vermischen 5 bis 50 Gew.-% eines ersten Polymers mit Repetiereinheiten der Formel $\{CH_2CR^1R^2\text{-}C(O)O\}$ mit 95 bis 50 Gew.-% eines Tetrafluorethylen-Polymers, das ein Polymer des Tetrafluorethylens ist, worin bis zu 20 Mol-% des Tetrafluorethylen-Monomers durch andere fluorierte Monomere substituiert sein können, worin $R^1$ und $R^2$ unabhängig ausgewählte Alkyl-Gruppen sind, mit der Maßgabe, daß die Gesamtzahl der Kohlenstoff-Atome in $R^1$ und $R^2$ 20 oder weniger beträgt, zur Bildung eines Gemischs;
    (b) das Vermischen dieses Gemischs in der Schmelze bei einer Temperatur oberhalb der Glasübergangs-Temperatur und des Schmelzpunkts des ersten Polymers, jedoch unterhalb von 270 °C; und
    (c) das Formen des Gemischs zu Formteilen.

16. Verfahren nach Anspruch 15, worin das erste Polymer in einer Menge von 10 bis 30 Gew.-% vorliegt und das Tetrafluorethylen-Polymer in einer Menge von 90 bis 10 Gew.-% vorliegt.

17. Verfahren nach Anspruch 16, worin das erste Polymer in einer Menge von 15 bis 25 Gew.-% vorliegt und das Tetrafluorethylen-Polymer in einer Menge von 85 bis 75 Gew.-% vorliegt.

18. Verfahren nach Anspruch 15, worin die Gesamtzahl der Kohlenstoff-Atome in $R^1$ und $R^2$ 10 oder weniger beträgt.

19. Verfahren nach Anspruch 15, Anspruch 16 oder Anspruch 17, worin $R^1$ Methyl ist und $R^2$ n-Propyl ist.

20. Verfahren nach Anspruch 15, Anspruch 16 oder Anspruch 17, worin das erste Polymer einen Schmelzpunkt von 200 °C oder weniger hat.

21. Verfahren nach Anspruch 15, worin das erste Polymer einen Polymerisationsgrad von 70 bis 5 000 hat.

22. Verfahren nach Anspruch 15, worin das Formen durch Schmelzformen erfolgt.

23. Verfahren nach Anspruch 22, worin das Schmelzformen mittels eines Schnecken-Schmelzgeräts erfolgt.

24. Verfahren nach Anspruch 22, worin das Schmelzformen mittels eines Verfahrens erfolgt, das aus Formpressen, Extrudieren durch eine Düse und Spritzgießen ausgewählt ist.

25. Verfahren nach Anspruch 15 oder Anspruch 19, weiterhin umfassend das Pyrolysieren des Formteils bei 275 °C bis 400 °C, bis das erste Polymer verflüchtigt worden ist..

26. Verfahren nach Anspruch 25, worin die Pyrolyse bei 300 °C bis 350 °C durchgeführt wird.

27. Verfahren nach Anspruch 15 oder Anspruch 19, worin das Mischen durch Schritte erfolgt, die
    (a) das Auflösen des ersten Polymers in einem Lösungsmittel zur Bildung einer Lösung,
    (b) das Aufschlämmen des Tetrafluorethylen-Polymers in einem Nicht-Lösungsmittel für das erste Polymer zur Bildung einer Aufschlämmung,
    (c) unter Rühren der Aufschlämmung das Hinzufügen der Lösung zu der Aufschlämmung und
    (d) das Abdampfen des Lösungsmittels und des Nicht-Lösungsmittels umfassen.

28. Verfahren nach Anspruch 27, worin das TetrafluorethylenPolymer ein granulares Material ist.

29. Verfahren nach Anspruch 15 oder Anspruch 18, worin das Mischen durch Vermischen der trockenen Pulver erfolgt.


**Revendications**

1. Un mélange de polymères comprenant 5 à 50 % en poids d'un premier polymère à motifs répétitifs de formule -(-CH$_2$-CR$^1$R$^2$-C(O)O-)- et 95 à 50 % en poids d'un polymère de tétrafluoréthylène qui est un polymère de tétrafluoréthylène dans lequel jusqu'à 20 moles pour cent du monomère tétrafluoréthylène peuvent être substituées par d'autres monomères fluorés, R$^1$ et R$^2$ étant des groupes alkyles choisis de manière indépendante et le nombre total d'atomes de carbone présents dans R$^1$ et dans R$^2$ étant non supérieur à 20.

2. La composition de la revendication 1 dans laquelle il est ajouté du carbone particulaire à concurrence de 1 à 233 % du poids dudit polymère de tétrafluoréthylène.

3. La composition de la revendication 2 dans laquelle ledit carbone particulaire est un carbone conducteur.

4. Une composition selon la revendication 1 ou la revendication 3 dans laquelle ledit premier polymère est présent en une proportion de 10 à 30 % en poids et ledit polymère de tétrafluoréthylène en une proportion de 90 à 70 %.

5. Une composition selon la revendication 4 dans laquelle ledit premier polymère est présent en une proportion de 15 à 25 % en poids et ledit polymère de tétrafluoréthylène en une proportion de 85 à 75 %.

6. Une composition selon la revendication 1 ou la revendication 3 dans laquelle ledit nombre total d'atomes de carbone dans lesdits groupes R$^1$ et R$^2$ est de 10 ou moins.

7. La composition de la revendication 4 ou de la revendication 6 dans laquelle ledit groupe R$^1$ est le groupe méthyle et ledit groupe R$^2$ est le groupe n-propyle.

8. La composition de la revendication 1, de la revendication 3 ou de la revendication 5 dans laquelle ledit premier polymère a un point de fusion de 200 °C ou moins.

9. La composition de la revendication 1 ou de la revendication 3 dans laquelle ledit premier polymère présente un degré de polymérisation de 70 à 10 000.

10. La composition de la revendication 9 dans laquelle ledit premier polymère présente un degré de polymérisation de 100 à 5000.

11. La composition de la revendication 3 ou la revendication 7 dans laquelle le poids dudit carbone conducteur représente 5 à 100 % du poids dudit polymère polytétrafluoréthylène.

12. La composition de la revendication 11 dans laquelle le poids dudit carbone conducteur représente 10 à 67 % du poids dudit polymère polytétrafluoréthylène.

13. La composition de la revendication 3, la revendication 5 ou la revendication 12 dans laquelle ledit carbone conducteur est de la fibre de carbone.

14. La composition de la revendication 13 dans laquelle ledit carbone conducteur est de la fibre de carbone ou des fragments de fibres sous la forme d'
"une nappe de fibres de carbone disposées au hasard, lesdites fibres présentant en section une largeur de moins de 12 micromètres et une surface de fracture présentant une microstructure lamellaire composée de lamelles disposées en relation d'égale inclinaison et orientées dans une direction globalement parallèle à un axe de la section de la fibre, les lamelles s'étendant vers la périphérie des sections des fibres".

15. Un procédé de fabrication de pièces en polymère, comprenant les opérations consistant :
(a) à mélanger 5 à 50 % en poids d'un premier polymère à motifs répétitifs de formule -(-$CH_2$-$CR^1R^2$-C(O)O-)- avec 95 à 50 % en poids d'un polymère de tétrafluoréthylène qui est un polymère de tétrafluoréthylène dans lequel jusqu'à 20 moles pour cent du monomère tétrafluoréthylène peuvent être substituées par d'autres monomères fluorés, $R^1$ et $R^2$ étant des groupes alkyles choisis de manière indépendante et le nombre total d'atomes de carbone présents dans $R^1$ et dans $R^2$ étant non supérieur à 20, pour former un mélange ;
(b) à mélanger à l'état fondu ledit mélange à une température supérieure à la température de transition vitreuse et au point de fusion dudit premier polymère mais inférieure à 270 °C ; et
(c) à façonner ledit mélange en une pièce façonnée.

16. Un procédé selon de la revendication 15 dans lequel ledit premier polymère est présent en une proportion de 10 à 30 % en poids et ledit polymère de tétrafluoréthylène en une proportion de 90 à 70 %.

17. Un procédé selon la revendication 16 dans lequel ledit premier polymère est présent en une proportion de 15 à 25 % en poids, et ledit polymère de tétrafluoréthylène en une proportion de 85 à 75 %.

18. Un procédé selon la revendication 15 dans lequel ledit nombre total d'atomes de carbone dans lesdits groupes $R^1$ et $R^2$ est de 10 ou moins.

19. Le procédé de la revendication 15, de la revendication 16 ou de la revendication 17 dans lequel ledit groupe $R^1$ est le groupe méthyle et ledit groupe $R^2$ est le groupe n-propyle.

20. Le procédé de la revendication 15, de la revendication 16 ou de la revendication 17 dans lequel ledit premier polymère a un point de fusion de 200 °C ou moins.

21. Le procédé de la revendication 15 dans lequel ledit premier polymère présente un degré de polymérisation de 70 à 5000.

22. Le procédé de la revendication 15 dans lequel ledit façonnage est un façonnage à l'état fondu

23. Le procédé de la revendication 22 dans lequel ledit façonnage à l'état fondu est réalisé par un dispositif de fusion à vis.

24. Le procédé de la revendication 22 dans lequel ledit façonnage à l'état fondu est réalisé par une méthode choisie parmi le moulage par compression, l'extrusion à travers une filière et le moulage par injection.

25. Le procédé de la revendication 15 ou de la revendication 19 comprenant en outre la pyrolyse de ladite pièce façonnée à une température de 275 à 400 °C, jusqu'à ce que ledit premier polymère soit volatilisé.

**26.** Le procédé de la revendication 25 dans lequel ladite pyrolyse est opérée à une température de 300 à 350 °C.

**27.** Le procédé de la revendication 15 ou la revendication 19 dans lequel ledit mélange est opéré par étapes, comprenant :
(a) la dissolution dudit premier polymère dans un solvant pour former une solution ;
(b) la mise en suspension dudit polymère polytétrafluoréthylène dans un non-solvant pour ledit premier polymère pour former une suspension ;
(c) avec agitation simultanée de ladite suspension, l'addition de ladite solution à ladie suspension ; et
(d) l'évaporation dudit solvant et dudit non-solvant.

**28.** Le procédé de la revendication 27 dans lequel ledit polymère polytétrafluoréthylène est une matière granulaire.

**29.** Le procédé de la revendication 15 ou la revendication 18 dans lequel ledit mélange est réalisé par mélange de poudres sèches.